# EUROPEAN PATENT SPECIFICATION

(11) **EP 0 324 430 B1**
(45) Date of publication and mention of the grant of the patent: **21.06.1995**
(21) Application number: 89100330.3
(22) Date of filing: 10.01.1989
(51) Int. Cl.: C08L 21/00, C08L 51/06

(54) **A thermoplastically processable composition and a method of manufacturing said composition**
Thermoplastische Komposition und Methode zu deren Herstellung
Une composition qui est thermoplastiquement utilisable et une méthode pour sa fabrication

(30) Priority: 15.01.1988 SE 8800103
(43) Date of publication of application: 19.07.1989
(73) Proprietor: Borealis Holding A/S, DK-2800 Lyngby (DK)
(72) Inventor: Janson, Gunnar, S-12349 Farsta (SE)
(74) Representative: Boecker, Joachim, Dr.-Ing.

(56) References cited:
- AU-A- 8 774 215

## Description

Thermoplastic elastomeric materials are a well known type of polymer material which can be formed by methods conventionally used for thermoplastics into articles having properties which are in many respects the same as similar articles made of vulcanized rubber. A known type of thermoplastic elastomeric material consists of a continuous matrix of a thermoplastic polymer material, such as polypropene, and fine particles of a vulcanized rubber, such as a vulcanized ethylene-propylene-terpolymer, dispersed in the matrix. The particles of rubber may have a size of one or a few »m and the content of fine particles of vulcanized rubber is generally greater than the content of thermoplastic polymer material. The rubber may be dynamically vulcanized in the thermoplastic polymer material, in which case particles of the rubber are dispersed in the polymer material during production, while the rubber is subjected to vulcanization. Alternatively, the rubber may be vulcanized in a separate process without contact with the thermoplastic polymer material and be dispersed in the thermoplastic polymer material in the form of fine particles in vulcanized state. The dynamic vulcanization can be performed by the thermoplastic polymer material and rubber being blended at a temperature above the plasticization temperature of the polymer material, or above its crystalline melting temperature, after which a conventional vulcanizing agent for the rubber is added. While being subjected to shearing, the blend is then kept sufficiently long, usually a few minutes, at a temperature sufficient for the rubber to be preferably fully vulcanized. This enables the rubber in vulcanized form to be dispersed uniformly throughout the thermoplastic material. These materials can be used to produce various articles such as hoses, cables, extruded sections and various articles by means of injection moulding, blow-moulding and compression moulding. Thermoplastic elastomeric materials of the type described, as well as their manufacture, are described in a number of patent specifications, such as US patent 3,037,954 and 4,104,210.

Another known type of thermoplastic elastomer consists of silane-grafted elastomers, such as silane-grafted ethylen-propylene-rubber, or silane-grafted blends of an elastomer and a thermoplastic in which either the elastomer or the thermoplastic is silane-grafted or both are silane-grafted, such as a silane-grafted blend of ethylene-propylene-rubber and polypropylene in which only the first component is silane-grafted. After thermoforming such thermoplastic elastomers, e.g. by extrusion, the article produced is cross-linked upon contact with moisture or water, the silane-grafted component(s) being cross-linked via the hydrolysable silane groups to form siloxane bonds. Thermoplastic elastomers of these latter types are described in published German patent application 3,207,713 and European patent application 181,735. Here the rubber is not in the form of particles in vulcanized state dispersed in a continuous matrix of thermoplastic. Instead, thermoplastic and elastomer are homogenously mixed together in one phase and these latter thermoplastic elastomers have substantially poorer elastic properties in cross-linked state than those described earlier.

According to the present invention it has been found possible to produce thermoplastically processable elastomers which in cross-linked state are considerably more resistant to deformation at high temperatures, have better elastic properties and better resistance to chemicals than the thermoplastic elastomers described first, and considerably better elastic properties than the last-described thermoplastic elastomers. The thermoplastically processable elastomers according to the present invention can be formed using conventional thermoforming methods and after forming can be transformed to cross-linked products.

The present invention relates to a thermoplastically processable composition comprising a continuous matrix of a thermoplastic polymer material (in the following called the polymer material) and fine discrete particles of a vulcanized rubber dispersed in said matrix, and is characterised in that the polymer material contains hydrolysable silane groups and is hence cross-linkable by means of hydrolysis and condensation upon absorption of water and/or moisture. The composition used in an article produced by thermoplastic working can thus be transformed to a fully cross-linked material.

The polymer containing the hydrolysable silane groups can be manufactured by grafting hydrolysable silane groups onto a polymer, such as polyethylene, or by incorporating the hydrolysable silane groups into the molecular structure of a polymer by copolymerisation of an α-mono olefin, such as ethylene, with an unsaturated silane monomer containing hydrolysable groups.

The rubber in the composition may be of the same type as is used in previously known thermoplastic elastomers and will be exemplified later. The content of rubber shall be sufficient to allow the composition to have sufficient elasticity in cross-linked state and the content of thermoplastic polymer material shall be sufficient to form a continuous phase which will make the composition thermoplastically processable. The content of rubber is 25-90 %, preferably 35-85 % and most preferably 50-80 %, and the content of polymer material is 10-75 %, preferably 15-65 % and most preferably 20-50 %, of the weight of the composition. The particles of the vulcanized rubber have a size of at most 50 »m, preferably at most 5 »m. An average particle size of 0.1-2 »m is particularly preferred.

According to a preferred embodiment of the present invention the polymer material containing hydrolysable silane groups is a polymer material grafted with a silane containing hydrolysable groups. This embodiment will be described first.

Silane-grafting of polyolefins and the production of cross-linked products of silane-grafted polyolefins are described in detailed in US patents 3,075,948 and 3,646,155. The polymer material in the matrix can be silane-grafted and cross-linked in the same or a similar manner. Briefly, in this known technique the polymer material is caused to react with an unsaturated, hydrolysable silane, e.g. vinyl tri-methoxysilane, in the presence of a compound having the ability to produce free-radical sites in the polymer material, e.g. a peroxide such as dicumyl peroxide, in such small quantities that cross-linking through free radicals occurs only negligibly or not at all. The free radicals thus produced react with the unsaturated silane groups to form a silane-grafted polymer material. The grafted polymer material is cross-linked after extrusion or some other thermoforming procedure when the product formed is brought into contact with moisture or water so that the hydrolysable groups in the silane radical are hydrolysed and, due to condensation, give siloxane bonds between the grafted molecules in the polymer material. Examples of silanes suitable for use are vinyl-tri-methoxy-silane, vinyl-tri-ethoxy-silane, vinyl-tris(β-methoxy-ethoxy) silane and examples of peroxides suitable for use are dicumyl peroxide, 1,1-ditertiary-butyl peroxy-3,3,5-trimethyl-cyclohexane, 2,5-dimethyl-2,5-ditertiary-butyl peroxy-hexane and ditertiary-butyl peroxide. The total amount of silane and peroxide is suitably 0.5-5 %, preferably 0.5-3.5 % of the weight of the polymer material in the matrix, and the quantity of peroxide suitably at most 20 %, preferably 5-15 %, of said total amount of silane and peroxide. Cross-linking of the silane-grafted polymer material can be accelerated by a silanol condensation catalyst such as dibutyl tin laurate, dibutyl tin diacetate and dibutyl tin dioctoate, which is added to the composition when it is to be used for making an article, or to a water bath in which the formed article is placed to achieve cross-linking. The silanol condensation catalyst required is preferably 0.01-0.10 per cent by weight of the polymer material in the matrix. Other unsaturated silanes, peroxides and silanol condensation catalysts which can be used are stated in the US patent specifications mentioned earlier in this paragraph.

The thermoplastic polymer material in the matrix is preferably of a suitable quality for the processing method used in each case. Polyolefins graftable with silane are an example of thermoplastic polymer material which, grafted with a hydrolysable silane, can be used in the matrix. A particularly preferred group is the polyethylenes (PE), including High Density Poly-Ethylene (HDPE) (density greater than 0.950 g/cm³), Low Density Poly-Ethylen (LDPE) (density less than 0.930 g/cm³), Medium Density Poly-Ethylene (MDPE) (density 0.930-0.950 g/cm³) and Linear Low Density Poly-Ethylene (LLDPE) (density less than 0.950 g/cm³ and having substantially linear structure). Polyethylenes for which the silane-grafting causes at least halving of the melt flow index, are excellent for use according to the present invention. Chlorinated polyethylene such as chlorinated HDPE and chlorinated LDPE containing from a couple up to 50 per cent by weight chlorine can also be used. Other examples of silane-graftable polymer material which after grafting can be used in the matrix are copolymers of ethylene and one or more α-olefins containing 2-6 carbon atoms, such as propylene, 1-butene, 1-pentene, 1-hexene, 2-methyl-1-propene, 3-methyl-1-pentene, 4-methyl-1-pentene, 5-methyl-1-hexene and mixtures thereof. Particularly preferred is ethylene-propylene-polymer having an ethylene content of at least 40 per cent by weight. Other examples of silane-graftable polymer materials which after grafting can be used in the matrix are ethylene-propylene-terpolymer (EPDM) having an ethylene content of at least 30 per cent by weight. A diene monomer having at least 5 carbon atoms, such as 1,4-pentadiene, 5-alkenyl-2-norbornene, 2,5-norbornadiene, 1,5-cyclo-octadiene and dicyclo-pentadiene which, after the polymerization, have double bonds remaining from the diene monomer molecules, may be included as the third monomer in the ethylene-propylene-terpolymer. In these polymers, the ethylene, propylene and diene monomer preferably account for 30-70 %, 22.5-68 % and 2-7.5 %, respectively of the weight of the terpolymer. Other examples of silane-graftable polymer material which after grafting can be used in the matrix are copolymers of ethylene and an unsaturated ester of a monocarboxylic acid containing at most 4 carbon atoms, such as copolymers of ethylene vinyl acetate (EVA), of which those containing up to 30 per cent by weight vinyl acetate, particularly those with 5-20 per cent by weight vinyl acetate, are preferred, as well as copolymers of ethylene ethyl acrylate (EEA), ethylene methyl acrylate (EMA), ethylene butyl acrylate (EBA) and ethylene methyl acrylate, especially those with 5-20 per cent by weight of the acrylate portion (such as the ethylene acrylate portion) in the copolymer. Another group of polymers which can be used as silane-grafted polymer material in the matrix is blends of the exemplified polymers together with other polymers, such as mixtures of ethylene-propylene rubber (EPR) with polypropylene (PP), with polybutene, with polystyrene or with ethylene vinyl acetate (EVA), as well as mixtures of PE with various copolymers of ethylene with another monomer, e.g. mixtures of PE with EPR, EPDM and EVA.

According to another embodiment of the present invention, the polymer material containing hydrolysable silane groups is a copolymer of one or more alfa monoolefins with an unsaturated silane containing hydrolysable groups. The alfa monoolefin is preferably an olefin selected from olefins having 2-8 carbon atoms. Examples of suitable olefins are ethylene, propylene and a mixture of these olefins. The content of the silane in the polymer material may be 0.1-10% by weight based on the weight of the copolymer. The most preferred copolymer is an ethylene vinyl-silane copolymer.

The types of rubber which can be used in the composition according to the present invention include both synthetic rubbers and natural rubbers which are vulcanizable. For a rubber of unsaturated type a grade with high unsaturation is preferably chosen, in order to achieve dense cross-linking in the vulcanized product. Examples of suitable rubber types are ethylene-propylene rubber (EPR), ethylene-propylene-diene rubber (EPDM, chlorosulphonated polyethylene, polyisoprene, polychloroprene, butadiene rubber, styrene-butadiene rubber, nitrile rubber, butyl rubber, halogenated butyl rubber and polybutylene copolymers. The third monomer in EPDM may be a diene monomer with at least 5 carbon atoms, such as 1.4-pentadiene, 5-alkenyl-2-norbornene, 2.5-norbornadiene, 1.5-cyclo-octadiene and dicyclo-pentadiene which, after the polymerization, have double bonds remaining from the diene momomer. If the rubber is vulcanized dynamically it shall in unvulcanized state, at least under shear, be sufficiently compatible with the silane-grafted polymer material in the matrix in its heated state to form from at least the major part of the rubber constituent vulcanized, small, discrete particles in the thermoplastic matrix material under high shear. So that the vulcanized rubber shall form fine discrete particles in the polymer matrix, a shear rate of at least 1500 sec⁻¹, and preferably of at least 2000 sec⁻¹, shall be used. The most preferred shear rate is 2,500 to 10,000 sec⁻¹. Shear rate is calculated by dividing the product of the circumference of the circle generated by the screw tip of the mixer times the revolutions of the screw per second by the tip clearance. In other words, shear rate is the tip velocity divided by the tip clearance.

The vulcanizing agent used may be an agent normally used for the relevant type of rubber and which will not cross-link the silane-grafted polymer material during manufacture of the composition, e.g. sulphur, sulphonated compounds, isocyanates, phenolic resins, in cerain cases peroxides and other vulcanizing agents described in the US patent specifications 3,037,954 and 4,104,210 mentioned above. The normal quantity of vulcanizing agent used is 0.05-10%, preferably 0.1-8% of the weight of the rubber.

The composition according to the invention may contain additives of conventional type such as antioxidants, fillers, e.g. chalk and carbon black, plasticizers, lubricants, stabilizers, waxes, pigments and other additives described in the above-mentioned US patents 3,037.954 and 4,104,210. Conventional quantities of the additive are used.

According to one method of manufacturing the composition a mixture of the polymer material containing hydrolysable silane groups, the unvulcanized rubber and a vulcanizing agent for the rubber is heated to a temperature necessary for vulcanization of the rubber, under high shear of the mixture to disperse the vulcanized rubber thus produced, in the form of fine particles in the thermoplastic polymer material. Preferably a mixture of the polymer material and the rubber is heated to a temperature exceeding the plasticization or melting temperature of the polymer material, to form a homogenous blend, before addition of the vulcanizing agent.

A composition according to the invention comprising a polymer material grafted with a silane can also be manufactured by mixing the thermoplastic polymer material, together with a silane containing unsaturated groups and hydrolysable groups and a peroxide, as well as a rubber in unvulcanized state, together with a vulcanizing agent therefor, and heating the blend to a temperature necessary for vulcanization of the rubber, under simultaneous high shear. The polymer material and unvulcanized rubber are preferably homogenized before addition of the other components.

The invention will be explained in more detail by describing a number of examples. In the following the term "parts" shall mean parts by weight and "%" shall mean per cent by weight.

The dynamic vulcanization in all the following examples is performed in a Brabender mixer at a shear rate of about 3000 sec⁻¹.

### Example 1

100 parts granulated HDPE (Hostalene GC 7260, Höchst AG) with a melt flow index (MFI 2.16 kg, 190°C) of 8 g/10 min and a density of 0.957 g/cm³ are covered by means of stirring with 2 parts vinyl triethoxy-silane containing 0.15 parts dicumyl peroxide dissolved therein and 0.15 parts antioxidant mixed therein consisting of pentaerythrityl-tetra kis-(3(3,5-di-tert, butyl-4-hydroxy-phenyl)-propionate) (Irganox 1010, Ciba-Geigy), until all liquid has been absorbed by the granules. The mixture is then continuously masticated for about 2 minutes in a mixer in which the temperature is maintained at about 180°C. The silane-grafted product thus obtained is granulated and packed in hermetically sealed plastic sacks until required for use. 60 parts of the silane-grafted HDPE granulate, 40 parts natural rubber (Standard Malaysian Rubber Grade 5) and 1 part polymerised 1,2-dihydro-2,2,4-tri-methyl quinolin (Flectol^{R} H antioxidant) are mixed in a Brabender mixer at a temperature of 180°C. When a homogenous blend has been obtained, vulcanizing agent in the form of 1 part 2-bis-benzothiazyl disulphide and 5 parts m-phenylene bis-maleimide is added and mixing is continued for a few minutes at the temperature stated. A composition is obtained having a continuous matrix of thermoplastic, silane-grafted HDPE and particles of the vulcanized rubber having a size of less than 5 »m uniformly dispersed in this matrix. The composition is stored in granulated form in hermetically sealed sacks until required for use. By way of example of an application, it is formed by means of compression moulding at a temperature of 160°C to a sheet 1 mm thick. This sheet is treated for 15 hours in a 90°C water bath containing 1 % of a silanol condensation catalyst in the form of a dibutyl tin laurate. This corresponds to a catalyst content of 0.05 % in the HDPE matrix. The sheet absorbs water and the silane-grafted HDPE in the matrix is thus cross-linked. Alternatively the thermoformed product may be stored in a moist atmosphere for a few weeks to effect cross-linking. In the latter case the silanol condensation catalyst can be added in the form of a polyethylene-master-batch to the silane-granted HDPE under mixing at 160°C before the sheet is moulded. The sheet treated in the water bath as described above fulfils the Hot-set-test requirements in accordance with IEC Publication 502, 1983. A similar sheet which has not been cross-linked by the described treatment in a water bath does not fulfil these requirements.

Instead of the HDPE specified, an HDPE having a melt flow index of 7g/10 min and a density of 0.965 g/cm³ (DMDS-7007, Neste Polyethylene) may be used.

The thermoforming of the composition exemplified in this Example, as well as the described methods of cross-linking the silane-grafted thermoplastic polymer material in the article produced are also applicable in the following Examples.

### Example 2

A silane-grafted HDPE is manufactured in the manner described in Example 1. Dynamic styrene-butadiene rubber is vulcanized herein in the manner described in Example 1. The parts by weight stated for HDPE, rubber and the other substances used are the same except that the quantity of 2-bis-benzothiazyl disulphide used is 1,2 parts and the quantity of m-phenylene bis-maleimide is 3 parts.

### Example 3

A silane-grafted HDPE is manufactured in the manner described in Example 1. 40 parts of the silane-grafted HDPE granulate, 60 parts butadiene rubber and 1 part polymerized 1,2-dihydro-2,2,4-trimethyl quinolin, 3 parts zinc oxide and 0.6 parts stearic acid are mixed in a Brabender mixer at a temperature of 180°C. When a homogenous blend has been obtained, vulcanizing agent in the form of 1,2 parts tetramethyl-thiuram disulphide, 0.6 parts sulphur and 0.3 parts 2-bis-benzothiazyl disulphide is added, and mixing continued for a few minutes. A composition is obtained having a continuous matrix of thermoplastic, silane-grafted HDPE and particles of the vulcanized rubber having a size of less than 2 »m uniformly dispersed in this matrix.

### Example 4

A composition is manufactured in a single step, from the same ingredients as used in Example 1. A mixture of HDPE, vinyl triethoxy silane and peroxide and a mixture of natural rubber with additive and vulcanizing agent are placed together in a Brabender mixer and processed together at 180°C for a few minutes. A composition is obtained of the same kind as that obtained in Example 1.

### Example 5

A silane-grafted HDPE is manufactured in the manner described in Example 1. Nitrile rubber (Krynac^{R} 1408 H82 having an acrylonitrile content of 33 %, Polysar International S.A) is dynamically vulcanized herein in the manner described in Example 1. The parts by weight stated for HDPE, rubber and the other substances used are the same except that the quantity of 1,2-dihydro-2,2,4-trimethyl quinolin used is 0.5, the quantity of 2-bis-benzothiazyl disulphide is 2 parts and the quantity of m-phenylene bis-maleimide is 5 parts. A manufactured sheet with cross-linked matrix withstands the Hot-set-test whereas a similar plate in which the matrix is not cross-linked does not do so.

### Example 6

A composition is manufactured in the manner described in Example 5, with the exception that 40 parts HDPE, 60 parts nitrile rubber, 0.75 parts 1,2-dihydro-2,2,4-trimethyl quinolin, 3 parts 2-bis-benzothiazyl disulphide and 7.5 parts m-phenylene bis-maleimide are used.

### Example 7

100 parts granulated HDPE with a melt flow index of 0.6 g/10 min and a density of 0.960 g/cm³ are covered by means of stirring with 2 parts vinyl trimethoxy-silane containing 0.12 parts ditertiary butyl peroxide dissolved therein until all liquid had been absorbed by the granules. The mixture is then extruded through a continuous mixer in which the temperature is approximately 180°C, so that it remains in the mixer for about 2 minutes. The silane-grafted product thus obtained is granulated and packed in hermetically sealed plastic sacks until required for use. 40 parts of the silane-grafted HDPE granulate, 60 parts butyl rubber consisting of a copolymer of isobutene and isoprene containing 1.6 mol % unsaturation and a density of 0.915g/cm³ and 3 parts zinc oxide are mixed in a Brabender mixer at a temperature of 180°C. After a couple of minutes the silane-grafted HDPE has melted and a homogenous blend has been obtained. Vulcanizing agent consisting of brominated phenol formaldehyde resin (SP-1056, Schenectady Chemicals) was added and mixing continued for a few minutes at the temperature stated. A composition is obtained having a continuous matrix of thermoplastic, silane-grafted HDPE and particles of the vulcanized butyl rubber uniformly dispersed in this matrix. The butyl rubber in this Example may be wholly or partially replaced by chlorobutyl rubber or bromobutyl rubber.

### Example 8

A silane-grafted HDPE is manufactured in the manner described in Example 1. 60 parts of this polymer are mixed with 40 parts chlorosulphonated polyethylene rubber containing 35 % Cl and 1 % S having a density of 1.18 (Hypalon 610, Du Pont de Nemours International S.A) in a Brabender mixer at a temperature of 180°C, at which temperature the silane-grafted HDPE melts, and a homogenous blend is obtained after a few minutes. Vulcanizing agent consisting of 3 parts magnesium oxide, 2 parts tetramethyl-thiuram disulphide and 1 part sulphur is added and mixing is continued for a few minutes. A composition is obtained having a continuous matrix of thermoplastic, silane-grafted HDPE and particles of chlorosulphonated polyethylene rubber in vulcanized form uniformly dispersed in this matrix. A manufactured sheet with cross-linked matrix withstands the Hot-set-test whereas a similar plate in which the matrix is not cross-linked will not do so. The same result is obtained with a vulcanizing agent consisting of 2 parts dipentamethylene-thiuram-hexasulphide and 1 part m-phenylene bis-maleimide.

### Example 9

A composition is manufactured in the manner described in Example 8 with the exception that 40 parts HDPE, 60 parts chlorosulphonated polyethylene rubber and 50 % more of each of the components included in the vulcanizing agent are used.

### Example 10

A silane-grafted HDPE is manufactured in the manner described in Example 7. 75 parts of this silane-grafted polymer are mixed with 25 parts polychloroprene (Neoprene^{R} W, Du Pont de Nemours International S.A) in a Brabender mixer at a temperature of 190°C. After a few minutes the silane-grafted HDPE has melted and a homogenous blend been obtained. Vulcanizing agent consisting of 2 parts m-phenylene bis-maleimide, 0.5 parts benzothiazyl sulphide and 2.5 parts zinc oxide is added and mixing is continued for a few minutes at the temperature stated. A composition is obtained having a continuous matrix of thermoplastic, silane-grafted HDPE and particles of vulcanized polychloroprene uniformly dispersed in this matrix.

### Example 11

30 parts silane-grafted HDPE manufactured in the manner described in Example 1, and 70 parts EPDM rubber with an ethylene content of 70 % (Vistalon^{R} 7000 from Esso Chemicals) were mixed in a Brabender mixer at a temperature of 180°C. When a homogenous blend has been obtained vulcanizing agent in the form of 1.8 parts polymerized 1,2-dihydro-2,2,4-tri-methyl quinolin, 3.5 parts tetramethyl-thiuram disulphide and 0.9 parts sulphur is added and mixing is continued for about 10 minutes at the temperature stated. A composition is obtained having a continuous matrix of thermoplastic, silane-grafted HDPE and particles of vulcanized EPDM uniformly dispersed in this matrix. A manufactured sheet with cross-linked matrix withstands the Hot-set-test whereas a similar plate in which the matrix is not cross-linked does not do so. A mixture manufactured in the same way but using an EPDM rubber having an ethylene content of 50 % (Vistalon 2504) gives a product which withstands the Hot-set-test like the EPDM grade described earlier.

### Example 12

Compositions are manufactured in the manner described in Example 11 with the exception that 60 parts HDPE, 40 parts EPDM rubber and 57 % of the quantity of each of the components included in the vulcanizing agent are used.

### Examples 13-24

In each of Examples 1-6, 8, 9 and 11-12, the silane-grafted HDPE is replaced by silane-grafted LDPE manufactured from LDPE (DFDS 4444, Neste Polyethylene) having a melt flow index of 2.2 g/10 min and a density of 0.922 g/cm³, and in each of Examples 7 and 10 it is replaced by silane-grafted LDPE manufactured from LDPE (DFDS 6644, Neste Polyethylene) having a melt flow index of 0.3g/10 min and a density of 0.922 g/cm³. The silane-grafting is performed in the same manner as described for HDPE in the corresponding Examples 1-12.

### Examples 25-36

In each of Examples 1-12 the silane-grafted HDPE is replaced by silane-grafted MDPE manufactured from MDPE (DFDS 1244, Neste Polyethylene) having a melting index of 0.7g/10 min and a density of 0.935g/cm³. The silane-grafting is performed in the same manner as described for HDPE in the corresponding Examples 1-12.

### Examples 37-48

In each of Examples 1-12 the silane-grafted HDPE is replaced by silane-grafted LLDPE manufactured from LLDPE (LPLD 8016, Neste Polyethylene) having a melt flow index of 3.5 g/10 min and a density of 0.934 g/cm³. The silane-grafting is performed in the same manner as described for HDPE in the corresponding Examples 1-12.

### Example 49

A silane-grafted chlorinated polyethylene is manufactured in the following manner. 100 parts chlorinated polyethylene having a chlorine content of 36 % (Bayer^{R} CM 3630, Bayer AG) and a density of 1.19 g/cm³ are mixed with 0.5 parts triphenyl phosphite (Mellite 310), 5 parts epoxidized soyabean oil (Pliabrac^{R} A), 2 parts calcium stearate, 0.1 parts dicumyl peroxide and 2 parts vinyl trimethoxy silane. The mixture is compounded in a continuous mixer at a temperature of 155°C. The silane-grafted, chlorinated polyethylene obtained can be used as thermoplastic matrix instead of the silane-grafted HDPE in Examples 2, 5 and 6 to provide compositions having good resistance to oil.

### Example 50

100 parts granulated ethylene vinyl acetate-copolymer (EVA) (Escorene^{R} UL 00206, Esso Chemicals) containing 6 per cent by weight vinyl acetate and having a melt flow index of 2.0 g/10 min are added to 2 parts vinyl triethoxy-silane containing 0.2 parts dissolved dicumyl peroxide until these chemicals have been distributed over the surface of the granules during stirring. The mixture obtained is then compounded in a continuous mixer in which the temperature is approximately 205°C, and granulated. The silane-grafted copolymer can be used as thermoplastic matrix instead of the silane-grafted HDPE in Examples 1-3 and 5-12, thus producing compositions with a high degree of elasticity. A composition can also be manufactured in the manner described in Example 4.

### Example 51

A silane-grafted product is manufactured from ethylene ethylacrylate-copolymer (EEA) (EEA 7365, BP Chemicals) having a melt flow index of 8.0 g/10 min and an ethylacrylate content of 9 per cent by weight, in the same manner as described for the ethylene vinylacetate-copolymer in Example 50. The silane-grafted copolymer can be used as thermoplastic matrix instead of the silane-grafted HDPE in Examples 1-3 and 5-12, thus producing thermoplastic elastomers with a high degree of elasticity. A composition can also be manufactured in the manner described in Example 4.

### Example 52

A silane-grafted product is manufactured from ethylene butylacrylate-copolymer (DFDS 6472, Neste Polyethylene) having a melt flow index of 1.0 g/10 min and a butylacrylate content of 7 per cent by weight, in the same manner as described for the ethylene vinylacetate-copolymer in Example 50. The silane-grafted copolymer can be used as thermoplastic matrix instead of the silane-grafted HDPE in Examples 1-3 and 5-12, thus producing thermoplastic elastomers with a high degree of elasticity. A composition can also be manufactured in the manner described in Example 4.

### Example 53

100 parts granulated ethylene propylene rubber (EPR) (Vistalon^{R} 719, Esso Chemicals) containing 75 per cent by weight ethylene and having a density of 0.86 g/cm³ are added to 15 parts polypropylene (PP) (Hostalen^{R} PPN 2060, Höchst AG) in granulate form having a density of 0.9 g/cm³. 1 part vinyl trimethoxy-silane containing 0.2 parts dicumyl peroxide is added to the mixture and is under stirring distributed over the surface of the granules. The mixture obtained is then compounded in a continuous mixer in which the temperature is slightly below 200°C, and granulated. The silane-grafted blend of copolymers, in which only the ethylene propylene rubber is silane-grafted but not the polypropylene, can be used as thermoplastic matrix instead of the silane-grafted HDPE in Examples 1-3, 7-9 and 12.

### Example 54

100 parts ethylene propylene rubber of the type described in Example 53 are mixed with 30 parts ethylene vinylacetate-copolymer of the type described in Example 50. 1 part vinyl trimethoxy-silane containing 0.2 parts dicumyl peroxide is added to the mixture and is under stirring distributed over the surface of the granules. The mixture obtained is then treated and granulated in the manner described in Example 53. The silane-grafted blend of copolymers, in which both the ethylene propylene rubber and the ethylene vinylacetate are silane-grafted, can be used as thermoplastic matrix instead of the silane-grafted HDPE in Example 12.

### Example 55

A mixture is prepared consisting of 35 parts LLDPE (LL 104 AA, BP Chemicals), 28.3 parts EVA (Levapren^{R} 450, Bayer AG), 3.1 parts nitrile rubber (Breon^{R} RTM N36 C35, BP Chemicals), 31.8 parts carbon black (Carbon Black P Grade, Phillips Petroleum) and 1.8 parts antioxidant 1,2-dihydro-2,2,4-trimethyl quinolin (Flectol^{R} H). To this are added 1.07 parts vinyl trimethoxy silane and 0.1 parts dicumyl peroxide and the mixture treated in a Banbury-mixer at 190°C for a good 8 minutes so that the nitrile rubber was grafted onto LLDPE and this graft-polymer becomes silane-grafted. This silane-grafted polymer can be used as thermoplastic matrix instead of silane-grafted HDPE in Examples 5 and 6 and produces thermoplastic elastomers having high elasticity and good resistance to oil.

### Example 56

In each of Examples 1, 2, 3, 5, 6, 8, 9, 11 and 12, the silane-grafted HDPE is replaced by ethylene vinyl-silane copolymer (VISICO^{R} NEWS 1405, Neste Polyethylene) having a melt flow index (MFI 2.16 kg, ASTM D 1238) of 0.6 g/10 min and a density of 0.923 g/cm³. Instead of the silanol condensation catalyst described in Example 1, the silanol condensation catalyst VISICO^{R} NEWS 1392 (Neste Polyethylene) may be used and adde in the form of a master-bath during the moulding operation.

When manufacturing the composition according to the present invention, it is also possible to use statically vulcanized rubbers, e.g. conventional vulcanized rubber products, such as natural rubber, styrene-butadiene rubber, nitrile rubber, chlorosulphonated polyethylene rubber, polychloroprene and EPDM rubber. A matrix can then advantageously be used consisting of a silane-grafted polymer material in the form of HDPE, LDPE, MDPE, LLDPE, chlorinated polyethylene or a copolymer of ethylene and an unsaturated ester of a monocarboxylic acid having at most 4 carbon atoms, such as EVA or EBA. The statically vulcanized rubber is then finely distributed, e.g. by milling at a low temperature such as minus 40°C and below, to particles having a size less than 200 »m, preferably less than 100 »m and most preferably less than 50 »m. The finely distributed rubber particles are then suitably dispersed in the silane-grafted polymer material in a mixer at a temperature above the plasticization temperature of the polymer material or its crystalline melting temperature. It is also possible to effect dispersion of the rubber and the silane-grafting in a single step, in which case the finely distributed rubber particles, polymer material in ungrafted form and the chemicals required for the silane-grafting are introduced together into the mixing equipment and subjected to the necessary treatment at increased temperature.

### Example 57

A silane-grafted HDPE is produced in the manner described in Example 1. A mixture of 40 parts of this polymer and 60 parts statically vulcanized EPDM rubber in the form of finely distributed particles having a size less than 50 »m is treated in a continuous mixer at 180°C for a few minutes. A composition is obtained with a continuous matrix of thermoplastic silane-grafted HDPE and particles of the vulcanized rubber having a size less then 50 »m uniformly dispersed in this matrix. The statically vulcanized rubber can be manufactured by vulcanizing a 1 mm thick sheet of an EPDM rubber in a press at 160°C for 12 min, the EPDM rubber consisting (per 100 parts) of 37.5 parts EPDM rubber (Vistalon^{R} 5630, Esso Chemicals), 14.5 parts carbon black, 29,0 parts talc (Mistron^{R} Vapor, Cyprus Ind.), 15.5 parts paraffin oil (Nypar^{R} 20, Nynäs Petroleum), 1.4 parts zinc oxide, 0.6 parts stearine, 0.6 parts benzothiazyl disulphide, 0.2 parts copper dimethyl dithiocarbamate, 0.3 parts zinc dibutyl dithiocarbamate and 0.4 parts sulphur. The cross-linking of the matrix in a moulded product is effected by using a silanol condensation catalyst as described in Example 1.

### Example 58

In Example 57 the silane-grafted HDPE is replaced by the ethylene vinyl-silane copolymer (VISICO^{R} NEWS 1405, Neste Polyethylene) described in Example 56. The silanol condensation catalyst described in Example 56 is added to the composition of the matrix and the rubber dispersed therein during the moulding operation to effect cross-linking of the copolymer in the moulded product.

## Claims

1. A thermoplastically processable composition comprising a continuous matrix of a thermoplastic polymer material and fine discrete particles of a vulcanized rubber dispersed in said matrix, **characterized** in that the polymer material contains hydrolysable silane groups and is hence cross-linkable by means of hydrolysis and condensation upon absorption of water and/or moisture.

2. A composition as claimed in claim 1, **characterised** in that the silane groups are grafted onto the polymer material.

3. A composition as claimed in claim 1, **characterised** in that the polymer material is a copolymer of at least one alfa monoolefin with an unsaturated hydrolysable organosilane monomer compound.

4. A composition as claimed in any of claims 1-3, **characterised** in that the polymer material constitutes 10-75 % and the rubber 25-90 % of the weight of the composition.

5. A composition as claimed in any of claims 1-3, **characterised** in that the polymer material constitutes 15-65 % and the rubber 35-85 % of the weight of the composition.

6. A composition as claimed in any of claims 1-3, **characterised** in that the polymer material constitutes 20-50 % and the rubber 50-80 % of the weight of the composition.

7. A composition as claimed in any of claims 1-6, **characterised** in that the rubber is dynamically vulcanized in the polymer material.

8. A composition as claimed in any of claims 1-7, **characterised** in that the particles of rubber have a size of at most 50 »m.

9. A composition as claimed in any of claims 1-8, **characterised** in that the particles of rubber have a size of at most 5 »m.

10. A composition as claimed in any of claims 1-9, **characterised** in that the particles of rubber have an average size of 0.1-2 »m.

11. A composition as claimed in any of claims 1, 2 and 4-10, **characterised** in that the polymer material comprises a silane-grafted polyolefin.

12. A composition as claimed in claim 11, **characterised** in that the polymer material comprises silane-grafted polyethylene.

13. A composition as claimed in claim 12, **characterised** in that the polyethylene consists of HD (High Density) polyethylene.

14. A composition as claimed in claim 12, **characterised** in that the polyethylene consists of LD (Low Density) polyethylene.

15. A composition as claimed in claim 12, **characterised** in that the polyethylene consists of MD (Medium Density) polyethylene.

16. A composition as claimed in claim 12, **characterised** in that the polyethylene consists of LLDPE (Linear Low Density) polyethylene).

17. A composition as claimed in any of claims 1, 2 and 4-10, **characterised** in that the polymer material comprises silane-grafted chlorinated polyethylene.

18. A composition as claimed in any of claims 1, 2 and 4-11, **characterised** in that the polymer material comprises a silane-grafted copolymer of ethylene and an α-olefin having 2-6 carbon atoms.

19. A composition as claimed in claim 18, **characterised** in that the copolymer is an ethylene-propylene-polymer having an ethylene content of at least 40 per cent by weight.

20. A composition as claimed in any of claims 1, 2 and 4-10, **characterised** in that the polymer material comprises a silane-grafted ethylene-propylene-terpolymer having an ethylene content of at least 30 per cent by weight.

21. A composition as claimed in any of claims 1, 2 and 4-10, **characterised** in that the polymer material comprises a silane-grafted copolymer of ethylene with an unsaturated ester of a monocarboxylic acid containing at most four carbon atoms.

22. A composition as claimed in claim 21, **characterised** in that the copolymer consists of ethylene-vinyl-acetate-copolymer containing up to 30 per cent by weight vinyl acetate.

23. A composition as claimed in any of claims 1, 3 and 4-10, **characterised** in that the olefin is selected from olefins having 2-8 carbon atoms.

24. A composition as claimed in claim 23, in which the olefin is selected from ethylene, propylene or a mixture of these olefins.

25. A method of producing a composition according to any of claims 1-24, **characterized** in that a mixture of the polymer material containing hydrolysable silane groups, an unvulcanized rubber and a vulcanizing agent for the rubber is heated to a temperature necessary to vulcanize the rubber, while subjecting the mixture to a shear high enough to simultaneously disperse the vulcanized rubber thus produced, in the form of fine discrete particles in the thermoplastic polymer material.

26. A method of producing a composition according to any of claims 2 and 4-22, **characterized** in that a thermoplastic polymer to be grafted with hydrolysable silane groups, together with a peroxide and a silane containing unsaturated groups and hydrolysable groups, as well as an unvulcanized rubber together with a vulcanizing agent therefor, are mixed and the mixture heated to a temperature necessary for vulcanization of the rubber, while subjecting the mixture to a shear high enough to simultaneously disperse the vulcanized rubber thus produced, in the form of fine discrete particles in the thermoplastic polymer material.

27. A method as claimed in claim 25, **characterised** in that the mixture of the polymer material containing hydrolysable silane groups and the unvulcanized rubber is heated to a temperature exceeding the plasticization or melting temperature of the polymer material, to form a homogenous blend before addition of the vulcanizing agent.

28. A method as claimed in claim 26, **characterised** in that the thermoplastic polymer material to be grafted with hydrolysable silane groups and the unvulcanized rubber are homogenized in a mixer before the silane, peroxide and vulcanizing agent are added to the mixer.

29. A method as claimed in any of claims 25-28, **characterized** in that the mixture is subjected to a shear rate of at least 1500 sec⁻¹.

30. A method as claimed in any of claims 25-28, **characterized** in that the mixture is subjected to a shear rate of 2500-10,000 sec⁻¹.

31. A method as claimed in any of claims 25-28, **characterized** in that the mixture is subjected to a shear rate of at least 2000 sec⁻¹.

## Patentansprüche

1. Thermoplastisch verarbeitbare Komposition mit einer kontinuierlichen Matrix aus einem thermoplastischen Polymermaterial und mit in dieser Matrix verteilten feinen diskreten Partikeln eines vulkanisierten Gummis, **dadurch gekennzeichnet**, daß das Polymermaterial hydrolisierbare Silangruppen enthält und damit bei Aufnahme von Wasser und/oder Feuchtigkeit durch Hydrolyse und Kondensation vernetzbar ist.

2. Komposition nach Anspruch 1, **dadurch gekennzeichnet**, daß die Silangruppen auf dem Polymermaterial aufgepfropft sind.

3. Komposition nach Anspruch 1, **dadurch gekennzeichnet**, daß das Polymermaterial ein Kopolymer mindestens eines Alpha-Mono-Olefins mit einer ungesättigten hydrolisierbaren Organosilanmonomerverbindung ist.

4. Komposition nach einem der Ansprüche 1-3, **dadurch gekennzeichnet**, daß das Polymermaterial 10-75 Gewichtsprozent und der Gummi 25-90 Gewichtsprozent der Komposition ausmacht.

5. Komposition nach einem der Ansprüche 1-3, **dadurch gekennzeichnet**, daß das Polymermaterial 15-65 Gewichtsprozent und der Gummi 35-85 Gewichtsprozent der Komposition ausmacht.

6. Komposition nach einem der Ansprüche 1-3, **dadurch gekennzeichnet**, daß das Polymermaterial 20-50 Gewichtsprozent und der Gummi 50-80 Gewichtsprozent der Komposition ausmacht.

7. Komposition nach einem der Ansprüche 1-6, **dadurch gekennzeichnet**, daß der Gummi in dem Polymermaterial dynamisch vulkanisiert ist.

8. Komposition nach einem der Ansprüche 1-7, **dadurch gekennzeichnet**, daß die Partikel des Gummis eine Größe von höchstens 50 »m haben.

9. Komposition nach einem der Ansprüche 1-8, **dadurch gekennzeichnet**, daß die Partikel des Gummis eine Größe von höchstens 5 »m haben.

10. Komposition nach einem der Ansprüche 1-9, **dadurch gekennzeichnet**, daß die Gummipartikel eine durchschnittliche Größe von 0,1-2 »m haben.

11. Komposition nach einem der Ansprüche 1, 2 und 4-10, **dadurch gekennzeichnet**, daß das Polymermaterial silan-gepfropftes Polyolefin enthält.

12. Komposition nach Anspruch 11, **dadurch gekennzeichnet**, daß das Polymermaterial silangepfropftes Polyethylen enthält.

13. Komposition nach Anspruch 12, **dadurch gekennzeichnet**, daß das Polyethylen aus (hochdichtem) HD-Polyethylen besteht.

14. Komposition nach Anspruch 12, **dadurch gekennzeichnet**, daß das Polyethylen aus (niedrigdichtem) LD-Polyethylen besteht.

15. Komposition nach Anspruch 12, **dadurch gekennzeichnet**, daß das Polyethylen aus (mitteldichtem) MD-Polyethylen besteht.

16. Komposition nach Anspruch 12, **dadurch gekennzeichnet**, daß das Polyethylen aus (linearniedrigdichtem) LLDPE-Polyethylen besteht.

17. Komposition nach einem der Ansprüche 1, 2 und 4-10, **dadurch gekennzeichnet**, daß das Polymermaterial silan-gepfropftes chloriniertes Polyethylen enthält.

18. Komposition nach einem der Ansprüche 1, 2 und 4-11, **dadurch gekennzeichnet**, daß das Polymermaterial ein silan-gepfropftes Kopolymer aus Ethylen und einem Alpha-Olefin mit 2-6 Kohlenstoffatomen enthält.

19. Komposition nach Anspruch 18, **dadurch gekennzeichnet**, daß das Kopolylmer ein Ethylenpropylen-Polymer mit einem Ethylengehalt von mindestens 40 Gewichtsprozent ist.

20. Komposition nach einem der Ansprüche 1, 2 und 4-10, **dadurch gekennzeichnet**, daß das Polymermaterial ein silan-gepfropftes Ethylenpropylen-Terpolymer enthält mit einem Ethylengehalt von mindestens 30 Gewichtsprozent.

21. Komposition nach einem der Ansprüche 1, 2 und 4-10, **dadurch gekennzeichnet**, daß das Polymermaterial ein silan-gepfropftes Kopolymer aus Ethylen mit einem ungesättigten Ester einer Monocarbonsäure mit höchstens vier Kohlenstoffatomen enthält.

22. Komposition nach Anspruch 21, **dadurch gekennzeichnet**, daß das Kopolymer aus einem Ethylenvinylazetat-Kopolymer besteht, welches bis zu 30 Gewichtsprozent Vinylacetat enthält.

23. Komposition nach einem der Ansprüche 1, 3 und 4-10, **dadurch gekennzeichnet**, daß das Olefin ein solches ist, welches 2 bis 8 Kohlenstoffatome hat.

24. Komposition nach Anspruch 23, in welchem das Olefin ausgewählt ist aus Ethylen, Propylen oder einer Mischung aus diesen Olefinen.

25. Verfahren zur Herstellung einer Komposition nach einem der Ansprüche 1-24, **dadurch gekennzeichnet**, daß ein Gemisch aus dem Polymermaterial, welches hydrolisierbare Silangruppen enthält, einem unvulkanisierten Gummi und einem Vulkanisierungsmittel für den Gummi auf eine für die Vulkanisierung des Gummis erforderliche Temperatur erhitzt wird, wobei die Mischung einer Scherung ausgesetzt wird, die hoch genug ist, um gleichzeitig den auf diese Weise erzeugten vulkanisierten Gummi in Form feiner diskreter Partikel in dem thermoplastischen Polymermaterial zu verteilen.

26. Verfahren zur Herstellung einer Komposition nach einem der Ansprüche 2 und 4-22, **dadurch gekennzeichnet**, daß ein mit hydrolisierbaren Silangruppen zu pfropfendes thermoplastisches Polymer zusammen mit einem Peroxyd und einem Silan, welches ungesättigte Gruppen und hydrolisierbare Gruppen enthält, sowie einem unvulkanisierten Gummi zusammen mit einem Vulkanisierungsmittel für diesen gemischt werden und die Mischung auf eine für die Vulkanisation des Gummis erforderliche Temperatur erhitzt wird, während das Gemisch einer Scherung ausgesetzt wird, die hoch genug ist, um gleichzeitig den auf diese Weise erzeugten vulkanisierten Gummi in Form feiner diskreter Partikel in dem thermoplastischen Polymermaterial zu verteilen.

27. Verfahren nach Anspruch 25, **dadurch gekennzeichnet**, daß die Mischung aus dem hydrolisierbare Silangruppen enthaltenden Polymermaterial und dem unvulkanisierten Gummi auf eine Temperatur erhitzt wird, welche die Plastifizierungs- oder Schmelztemperatur des Polymermaterial übersteigt, um eine homogene Mischung zu bilden, bevor das Vulkanisierungsmittel zugesetzt wird.

28. Verfahren nach Anspruch 26, **dadurch gekennzeichnet**, daß das mit hydrolisierbaren Silangruppen zu pfropfende thermoplastische Polymermaterial und der unvulkanisierte Gummi in einem Mischer homogenisiert werden, bevor das Silan, das Peroxyd und das Vulkanisierungsmittel dem Mischer zugegeben werden.

29. Verfahren nach einem der Ansprüche 25-28, **dadurch gekennzeichnet**, daß die Mischung einer Scherrate von mindestens 1500 sec⁻¹ unterworfen wird.

30. Verfahren nach einem der Ansprüche 25-28, **dadurch gekennzeichnet**, daß die Mischung einer Scherrate von 2500 bis 10000 sec⁻¹ unterworfen wird.

31. Verfahren nach einem der Ansprüche 25-28, **dadurch gekennzeichnet**, daß die Mischung einer Scherrate von mindestens 2000 sec⁻¹ unterworfen wird.

## Revendications

1. Composition transformable thermoplastiquement, comprenant une matrice continue d'une matière polymère thermoplastique et de fines particules distinctes d'un caoutchouc vulcanisé dispersées dans la matrice, caractérisée en ce que la matière polymère renferme des groupes silane hydrolysables et peut ainsi être réticulée au moyen d'une hydrolyse et d'une condensation après absorption d'eau et/ou d'humidité.

2. Composition suivant la revendication 1, caractérisée en ce que les groupes silane sont greffés sur la matière polymère.

3. Composition suivant la revendication 1, caractérisée en ce que la matière polymère est un copolymère d'au moins une alpha mono-oléfine et d'un organosilane monomère insaturé hydrolysable.

4. Composition suivant l'une quelconque des revendications 1 à 3, caractérisée en ce que la matière polymère représente de 10 à 75 % et le caoutchouc de 25 à 90 % du poids de la composition.

5. Composition suivant l'une quelconque des revendications 1 à 3, caractérisée en ce que la matière polymère représente de 15 à 65 % et le caoutchouc de 35 à 85 % du poids de la composition.

6. Composition suivant l'une quelconque des revendications 1 à 3, caractérisée en ce que la matière polymère représente de 20 à 50 % et le caoutchouc de 50 à 80 % du poids de la composition.

7. Composition suivant l'une quelconque des revendications 1 à 6, caractérisée en ce que le caoutchouc est vulcanisé dynamiquement dans la matière polymère.

8. Composition suivant l'une quelconque des revendications 1 à 7, caractérisée en ce que les particules de caoutchouc ont une dimension d'au plus 50 »m.

9. Composition suivant l'une quelconque des revendications 1 à 8, caractérisée en ce que les particules de caoutchouc ont une dimension d'au plus 5 »m.

10. Composition suivant l'une quelconque des revendications 1 à 9, caractérisée en ce que les particules de caoutchouc ont une dimension moyenne de 0,1 à 2 »m.

11. Composition suivant l'une quelconque des revendications 1, 2 et 4 à 10, caractérisée en ce que la matière polymère comprend une polyoléfine greffée par un silane.

12. Composition suivant la revendications 11, caractérisée en ce que la matière polymère comprend du polyéthylène greffée par un silane.

13. Composition suivant la revendications 12, caractérisée en ce que le polyéthylène consiste en polyéthylène HD (Haute Densité).

14. Composition suivant la revendications 12, caractérisée en ce que le polyéthylène consiste en polyéthylène LD (Basse Densité).

15. Composition suivant la revendications 12, caractérisée en ce que le polyéthylène consiste en polyéthylène MD (Moyenne Densité).

16. Composition suivant la revendications 12, caractérisée en ce que le polyéthylène consiste en polyéthylène LLDPE (Basse Densité Linéaire).

17. Composition suivant l'une quelconque des revendications 1, 2 et 4 à 10, caractérisée en ce que la matière polymère comprend du polyéthylène chloré greffé par un silane.

18. Composition suivant l'une quelconque des revendications 1, 2 et 4 à 10, caractérisée en ce que la matière polymère comprend un copolymère, greffé par un silane d'éthylène et d'une alpha-oléfine ayant de 2 à 6 atomes de carbone.

19. Composition suivant la revendication 18, caractérisée en ce que le copolymère est un polymère d'éthylène et de propylène ayant une teneur en éthylène d'au moins 40 % en poids.

20. Composition suivant l'une quelconque des revendications 1, 2 et 4 à 10, caractérisée en ce que la matière polymère comprend un terpolymère d'éthylène et de propylène greffé par un silane ayant une teneur en éthylène d'au moins 30 % en poids.

21. Composition suivant l'une quelconque des revendications 1, 2 et 4 à 10, caractérisée en ce que la matière polymère comprend un copolymère, greffé par un silane, d'éthylène et d'un ester insaturé d'un acide monocarboxylique ayant au plus 4 atomes de carbone.

22. Composition suivant la revendication 21, caractérisée en ce que le copolymère consiste en un copolymère d'éthylène et d'acétate de vinyle contenant jusqu'à 30 % en poids d'acétate de vinyle.

23. Composition suivant l'une quelconque des revendications 1, 3 et 4 à 10, caractérisée en ce que l'oléfine est choisie parmi les oléfines ayant de 2 à 8 atomes de carbone.

24. Composition suivant la revendication 23, dans laquelle l'oléfine est choisie parmi l'éthylène, le propylène ou un mélange de ces oléfines.

25. Procédé de préparation d'une composition suivant l'une quelconque des revendications 1 à 24, caractérisé en ce qu'il consiste à porter un mélange de la matière polymère contenant des groupes silane hydrolysables, d'un caoutchouc non vulcanisé et d'un agent de vulcanisation du caoutchouc à la température nécessaire pour vulcaniser le caoutchouc, tout en soumettant le mélange à un cisaillement suffisant pour disperser en même temps le caoutchouc vulcanisé ainsi produit sous la forme de fines particules distinctes dans la matière polymère thermoplastique.

26. Procédé de préparation d'une composition suivant l'une quelconque des revendications 2 et 4 à 24, caractérisé en ce qu'il consiste à mélanger un polymère thermoplastique à greffer par des groupes silane hydrolysables à un peroxyde et à un silane renfermant des groupes insaturés et des groupes hydrolysables, ainsi qu'à un caoutchouc non vulcanisé et à un agent de vulcanisation de celui-ci et à porter le mélange à la température nécessaire à la vulcanisation du caoutchouc, tout en soumettant le mélange à un cisaillement suffisant pour disperser en même temps le caoutchouc vulcanisé ainsi produit sous la forme de fines particules distinctes dans la matière polymère thermoplastique.

27. Procédé suivant la revendication 25, caractérisé en ce qu'il consiste à porter le mélange de la matière polymère renfermant des groupes silane hydrolysables et du caoutchouc non vulcanisé à une température dépassant le point de plastification et de fusion de la matière polymère pour former un mélange homogène avant l'addition de l'agent de vulcanisation.

28. Procédé suivant la revendication 26, caractérisé en ce qu'il consiste à homogénéiser la matière polymère thermoplastique à greffer par des groupes silane hydrolysables et le caoutchouc non vulcanisé dans un mélangeur avant d'ajouter au mélangeur le silane, le peroxyde et l'agent de vulcanisation.

29. Procédé suivant l'une quelconque des revendications 25 à 28, caractérisé en ce qu'il consiste à soumettre le mélange à une vitesse de cisaillement d'au moins 1.500 sec⁻¹.

30. Procédé suivant l'une quelconque des revendications 25 à 28, caractérisé en ce qu'il consiste à soumettre le mélange à une vitesse de cisaillement de 2.500 à 10.000 sec⁻¹.

31. Procédé suivant l'une quelconque des revendications 25 à 28, caractérisé en ce qu'il consiste à soumettre le mélange à une vitesse de cisaillement de 2.000 sec⁻¹.
